# EUROPÄISCHE PATENTSCHRIFT

(11) **EP 3 545 352 B1**
(45) Veröffentlichungstag und Bekanntmachung des Hinweises auf die Patenterteilung: **30.11.2022**
(21) Anmeldenummer: 17804509.2
(22) Anmeldetag: 17.11.2017
(51) Int. Cl.: G02B 27/01

(54) **KOPF-OBEN-ANZEIGEVORRICHTUNG MIT EINER BEFESTIGUNGSEINRICHTUNG ZUR INDIVIDUELLEN POSITIONSJUSTAGE EINES AUSSENGEHÄUSES FÜR EIN KRAFTFAHRZEUG, ANORDNUNG, KRAFTFAHRZEUG UND VERFAHREN ZUR MONTAGE EINER KOPF-OBEN-ANZEIGEVORRICHTUNG**
HEAD-UP DISPLAY DEVICE HAVING A SECURING ARRANGEMENT FOR INDIVIDUAL POSITION ADJUSTMENT OF AN OUTER HOUSING FOR A MOTOR VEHICLE, ARRANGEMENT, MOTOR VEHICLE, AND METHOD FOR MOUNTING A HEAD-UP DISPLAY DEVICE
DISPOSITIF D'AFFICHAGE TÊTE HAUTE COMPRENANT UN DISPOSITIF DE FIXATION POUR AJUSTER INDIVIDUELLEMENT LA POSITION D'UN BOÎTIER EXTÉRIEUR DANS UN VÉHICULE AUTOMOBILE, SYSTÈME, VÉHICULE AUTOMOBILE ET PROCÉDÉ DE MONTAGE D'UN DISPOSITIF D'AFFICHAGE TÊTE HAUTE

(30) Priorität: 22.11.2016 DE 102016122419
(43) Veröffentlichungstag der Anmeldung: 02.10.2019
(73) Patentinhaber: Valeo Schalter und Sensoren GmbH, 74321 Bietigheim-Bissingen (DE)
(72) Erfinder: SIMONIS, Karl, 74321 Bietigheim-Bissingen (DE); KUNTZE, Daniel, 74321 Bietigheim-Bissingen (DE); SCHOCH, Lars, 74321 Bietigheim-Bissingen (DE)
(74) Vertreter: Pothmann, Karsten
(86) Internationale Anmeldenummer: PCT/EP2017/079643
(87) Internationale Veröffentlichungsnummer: WO 2018/095821

(56) Entgegenhaltungen:
- EP-A2- 0 475 502
- WO-A1-2015/166012
- US-A- 1 871 877
- US-A- 2 654 286

## Beschreibung

Die vorliegende Erfindung betrifft eine Kopf-oben-Anzeigevorrichtung für ein Kraftfahrzeug mit einer Projektionseinrichtung. Die Projektionseinrichtung ist dazu ausgebildet, ein virtuelles Bild auf eine außerhalb der Projektionseinrichtung liegende und von einem Beobachter betrachtbare Projektionsfläche zu projizieren. Die Kopf-oben-Anzeigevorrichtung weist zumindest eine Befestigungseinrichtung an einem Außengehäuse der Kopf-oben-Anzeigevorrichtung auf, wobei mittels der Befestigungseinrichtung die Kopf-oben-Anzeigevorrichtung an einem Kraftfahrzeugbauteil befestigbar ist. Ferner betrifft die Erfindung eine Anordnung mit einer Kopf-oben-Anzeigevorrichtung und ein Kraftfahrzeug mit einer solchen Anordnung. Weiter betrifft die Erfindung ein Verfahren zur Montage einer Kopf-oben-Anzeigevorrichtung an einem Kraftfahrzeugbauteil.

Aus dem Stand der Technik sind Anzeigevorrichtungen für Kraftfahrzeuge bekannt, mit denen dem Beobachter oder dem Insassen, insbesondere als Fahrer, des Kraftfahrzeugs eine Anzeige bereitgestellt werden kann. Das Interesse richtet sich vorliegend insbesondere auf Kopf-oben-Anzeigevorrichtungen, welche auch als Head-up-Anzeigevorrichtung oder Head-up-Display (HUD) bezeichnet werden. Es handelt sich hierbei um ein Anzeigegerät, bei dem der Beobachter seine Kopfhaltung beziehungsweise seine Blickrichtung beibehalten kann, weil eine Information von einem Bordsystem des Kraftfahrzeugs in sein Sichtfeld projiziert wird. Eine derartige Anzeigevorrichtung umfasst üblicherweise eine Projektionseinrichtung, beispielsweise einen Bildschirm, zum Abstrahlen von Licht. Ferner umfasst die Anzeigevorrichtung eine Optikeinrichtung, welche beispielsweise einen oder mehrere Spiegel umfassen kann. Mit der Optikeinrichtung kann das von der Projektionseinrichtung abgestrahlte Licht auf ein Anzeigeelement projiziert werden. Das Anzeigeelement kann eine semi-transparente Spiegelfläche aufweisen. Diese semi-transparente Spiegelfläche kann insbesondere durch einen Bereich der Windschutzscheibe des Kraftfahrzeugs bereitgestellt werden. Die Überlagerung der auf das Anzeigeelement projizierten Information, welche von diesem reflektiert wird, wird mit einer durch das Anzeigeelement hindurch scheinenden Information aus einer hinter dem Anzeigeelement gelegenen Umgebung überlagert, wodurch ein virtuelles Bild beziehungsweise eine virtuelle Anzeige bereitgestellt werden kann.

Darüber hinaus umfasst eine Anzeigevorrichtung ein entsprechendes Außengehäuse, in welchem insbesondere die Projektionseinrichtung angeordnet sein kann. Im Allgemeinen wird die Anzeigevorrichtung in einem Cockpit vor dem Beobachter, insbesondere vor dem Fahrer, in einem Bauraum positioniert. Üblicherweise ist die Anzeigevorrichtung in einem Bauraum vor dem Fahrer am Armaturenbrett des Kraftfahrzeugs angeordnet.

Bei diesen Kopf-oben-Anzeigevorrichtungen gibt es Ausführungen, bei welchen das virtuelle Bild an die Innenseite der Windschutzscheibe projiziert wird, sodass es vom Beobachter, insbesondere dem Fahrer, an der Innenseite betrachtet werden kann. Des Weiteren sind dazu unterschiedliche Ausführungen von Kopf-oben-Anzeigevorrichtungen bekannt, bei welchen das virtuelle Bild nicht auf die Windschutzscheibe projiziert wird, sondern mit einem zusätzliche Spiegel, dem oben genannten Kombinierspiegel, der Kopf-oben-Anzeigevorrichtungen zum Beobachter hin projiziert wird und somit bei insbesondere richtiger Einstellung des Kombinierspiegels in dessen Gesicht projiziert wird. Nachfolgend ist das Interesse auf Kopf-oben-Anzeigevorrichtungen gerichtet, die keinen derartigen zusätzlichen Kombinierspiegel aufweisen, sondern Windschutzscheiben-Anzeigevorrichtungen sind.

Aufgrund von unterschiedlichen Windschutzscheibenneigungen müssen insbesondere solche Anzeigevorrichtungen, die die Windschutzscheibe als Projektionsfläche nutzen, an die Neigung der Windschutzscheibe angepasst werden. Aus diesem Grund bleibt eine solche Anzeigevorrichtung fahrzeugspezifisch, da die Anzeigevorrichtung immer entsprechend an die Windschutzscheibe, insbesondere die Windschutzscheibenneigung, angepasst werden muss.

Die US 5 905 477 offenbart beispielsweise eine solche Anzeigevorrichtung. Die Anzeigevorrichtung ist hierbei als Head-up-Display ausgebildet. An dem Head-up-Display ist zur Befestigung des Head-up-Displays ein erstes Befestigungselement angeordnet. An der Oberfläche, an welcher das Head-up-Display angeordnet werden soll, ist ein weiteres zum ersten Befestigungsteil korrespondierendes zweites Befestigungsteil angeordnet.

Das erste Befestigungsteil und das zweite Befestigungsteil sind derart miteinander verbindbar, dass sie relativ zueinander bewegbar sind. Das zweite Befestigungsteil weist dabei insbesondere eine Lücke auf, in welchem das erste Befestigungsteil einbringbar ist. Der Justageaufwand ist hier sehr groß, da die Anzeigevorrichtung in jedem Kraftfahrzeug individuell justiert werden muss. Weiterer Stand der Technik findet sich in den Druckschriften EP 0 475 502 A2, US 2 654 286 A und WO 2015/166012 A1.

Es ist Aufgabe der vorliegenden Erfindung, eine Kopf-oben-Anzeigevorrichtung, eine Anordnung, ein Kraftfahrzeug und ein Verfahren zu schaffen, wie die Kopf-oben-Anzeigevorrichtung das virtuelle Bild auf einer fahrzeugspezifischen, beziehungsweise windschutzscheibenspezifischen Projektionsfläche verlustärmer abbilden kann.

Diese Aufgabe wird erfindungsgemäß durch eine Kopf-oben-Anzeigevorrichtung, eine Anordnung, ein Kraftfahrzeug sowie ein Verfahren mit den Merkmalen gemäß den jeweiligen unabhängigen Ansprüchen gelöst.

Die Erfindung betrifft eine Kopf-oben-Anzeigevorrichtung für ein Kraftfahrzeug, welche auch als Head-up-Display bezeichnet wird, mit einer Projektionseinrichtung, welche zum Projizieren eines virtuellen Bilds auf eine außerhalb der Projektionseinrichtung liegende und von einem Beobachter betrachtbare Projektionsfläche ausgebildet ist. Die Kopf-oben-Anzeigevorrichtung weist zumindest eine Befestigungseinrichtung an einem Außengehäuse der Kopf-oben-Anzeigevorrichtung auf. Mittels der Befestigungseinrichtung ist die Kopf-oben-Anzeigevorrichtung an einem Kraftfahrzeugbauteil befestigbar.

Ein wesentlicher Gedanke der Erfindung ist darin zu sehen, dass die zumindest eine Befestigungseinrichtung ein Kugelgelenk aufweist. Mit dem Kugelgelenk kann eine Positionseinstellung der Kopf-oben-Anzeigevorrichtung zum Kraftfahrzeugbauteil in mit dem Kraftfahrzeugbauteil verbundenen Zustand genau, kontinuierlich und vielfältig durchgeführt werden. Das Kugelgelenk weist einen Kugelkopf auf, der mit einem Befestigungselement des Kraftfahrzeugbauteils koppelbar ist. Das Befestigungselement kann beispielsweise ein Stift, eine Schraube, eine Niete oder weitere nicht aufgezeigte Befestigungselemente sein, die dazu dienen, den Kugelkopf an dem Kraftfahrzeugbauteil anzuordnen.

Diese Ausgestaltung mit dem zumindest einem Kugelgelenk ermöglicht es, das Außengehäuse der Kopf-oben-Anzeigevorrichtung mit dem Befestigungselement des Kraftfahrzeugbauteils fahrzeugspezifisch auszurichten. Dadurch kann die Projektionseinrichtung in verschiedenen Fahrzeugen (auch für verschiedene Fahrzeughersteller beziehungsweise verschiedene Fahrzeugtypen) angeordnet werden. Mittels einer Optikeinrichtung der Projektionseinrichtung wird das von einem Projektor der Projektionseinrichtung erzeugte virtuelle Bild auf die Projektionsfläche projiziert. Die Optikeinrichtung weist zum Umlenken des virtuellen Bildes vom Projektor zur Projektionsfläche, welche insbesondere die Windschutzscheibe sein kann, einen Spiegel auf. Der Spiegel der Optikeinrichtung gleicht dabei eine Windschutzscheibenanomalie aus, und ist eine einzige Komponente, die fahrzeugspezifisch ist. Dieser Spiegel kann dann in den Ausmaßen gleich sein, mit gleichen Bauteilen, beispielsweise gleichen Lagerzapfen. Lediglich die Freiformfläche, welche die fahrzeugspezifische Windschutzscheibenanomalie ausgleicht, ist in ihrer Form entsprechend den Fahrzeugtypen beziehungsweise den Fahrzeugarten oder Herstellern angepasst. Das Außengehäuse kann, insbesondere bei einer Endmontage, spezifisch auf die Windschutzscheibenkippung beziehungsweise Windschutzscheibenneigung des Zielkraftfahrzeugs justiert werden. Die Verwendung von Gleichbauteilen einer Kopf-oben-Anzeigevorrichtung beim Verbau in verschiedenen Kraftfahrzeugen ist dadurch besonders vorteilhaft ermöglicht.

Der erfindungsgemässe Kugelkopf weist eine Aufnahme auf.

Dadurch kann das Befestigungselement in die Aufnahme des Kugelkopfs derart eingebracht werden, dass die Befestigungseinrichtung insgesamt sehr einfach an dem Kraftfahrzeugbauteil angeordnet werden kann. Damit ist eine einfache und dennoch positionssichere Montage an einem Kraftfahrzeugbauteil möglich.

In der erfindungsgemässen Ausgestaltungsform verläuft eine Längsachse der Aufnahme durch einen Mittelpunkt des Kugelkopfs.

Somit kann gewährleistet werden, dass das Befestigungselement in die Aufnahme eingebracht werden kann und um den Mittelpunkt des Kugelkopfs verschwenkt beziehungsweise gedreht werden kann. Dadurch kann eine hohe Genauigkeit der einzustellenden Position erreicht werden.

Es hat sich weiterhin als vorteilhaft erwiesen, wenn an einem Eingang der Aufnahme auf einer Oberfläche des Kugelkopfs ein erhabener Kragen ausgebildet ist, insbesondere wenn dieser um den Eingang umlaufend ausgebildet ist. Insbesondere kann der Kragen mit einem Kopf des Befestigungselements korrespondieren, so dass ein "Durchrutschen" des Befestigungselements durch den Kugelkopf verhindert werden kann. Dadurch kann eine hohe Positionssicherheit gewährleistet werden.

Gemäß einer weiteren vorteilhaften Ausgestaltungsform kann der Kragen einen Anschlag bilden, durch welchen eine Bewegung des Kugelkopfs in einer Kugelpfanne des Kugelgelenks definiert begrenzt ist. Dadurch ist es ermöglicht, dass die Bewegung der Kopf-oben-Anzeigevorrichtung relativ zu dem Kraftfahrzeugbauteil begrenzt ist. Somit kann der Montageaufwand verringert werden, da eine begrenzte Anzahl an Positionen bereitgestellt wird. Dies hat den Hintergrund, dass die Kopf-oben-Anzeigevorrichtung für verschiedene Kraftfahrzeuge beziehungsweise Kraftfahrzeugtypen nur im geringen Maße verstellt werden muss, um eine verbesserte Anzeige eines virtuellen Bildes zu realisieren. Die Montage wird dadurch erleichtert.

In einer weiteren vorteilhaften Ausgestaltungsform kann der Kugelkopf ein kugelförmiges Basiselement und eine dazu separate Buchse aufweisen, die in das Basiselement eingesetzt ist und in Richtung der Längsachse des Kugelkopfs relativ zum Kugelkopf verstellbar ist. Mit anderen Worten ist innerhalb des Basiselements des Kugelkopfs eine weitere separate Buchse eingebracht, welche insbesondere in Richtung der Längsachse verstellbar, insbesondere verschiebbar, ist. Somit kann ein weiterer Freiheitsgrad (bei dieser Ausführungsform insgesamt vier Freiheitsgrade) bereitgestellt werden, wodurch es ermöglicht ist, dass die Kopf-oben-Anzeigevorrichtung noch individueller beziehungsweise fahrzeugspezifischer positioniert werden kann. Dies ermöglicht es für noch mehr Fahrzeugmodelle beziehungsweise Fahrzeugtypen beziehungsweise Hersteller eine Kopf-oben-Anzeigevorrichtung bereitzustellen, die ein verbessertes virtuelles Bild für den Fahrer bereitstellt.

Es hat sich weiterhin als vorteilhaft erwiesen, wenn eine Kugelpfanne des Kugelgelenks ringförmig ausgebildet ist. Insbesondere ist somit ermöglicht, dass die mit dem Kugelkopf korrespondierende Kugelpfanne nur bereichsweise das Kugelgelenk umschließt, wodurch eine sehr einfache Möglichkeit aufgezeigt ist, wie die Kopf-oben-Anzeigevorrichtung gegenüber dem Kraftfahrzeugbauteil relativ beweglich gelagert sein kann. Dabei kann vorgesehen sein, dass die Kugelpfanne beispielsweise einstückig ausgebildet ist, und der Kugelkopf beispielsweise mittels eines Spritzgussverfahrens in die einstückige Kugelpfanne eingespritzt werden kann. Ebenfalls möglich ist, dass die Kugelpfanne zweistückig ausgebildet ist und beispielsweise nach einer Positionierung des Kugelkopfs an einem ersten Teil der Kugelpfanne ein zweiter Teil der Kugelpfanne an den ersten Teil der Kugelpfanne angeschraubt wird und der Kugelkopf innerhalb der Kugelpfanne positioniert werden kann.

Die Kugelpfanne und das Kugelgelenk können insbesondere aus den gleichen Materialien bestehen. Beispielsweise können die Kugelpfanne und der Kugelkopf aus einem Kunststoff oder aus Metall ausgebildet sein. Der Vorteil bei Metall ist, dass dieses eine hohe Wärmeleitfähigkeit besitzt, sodass Wärme, die beispielsweise von dem Außengehäuse, insbesondere von der Projektionseinrichtung abgestrahlt beziehungsweise abgegeben wird, vorteilhaft an die Befestigungseinrichtung und damit weiter an beispielsweise ein Kraftfahrzeugbauteil abgegeben werden kann. Vorteilhaft bei Kunststoff ist das geringe Gewicht. Es kann weiter insbesondere vorgesehen sein, dass das Befestigungselement wärmeleitend mit einem Kraftfahrzeugbauteil definiert verbindbar ist. Wärme, die von dem Außengehäuse, insbesondere von der Projektionseinrichtung an die Befestigungseinrichtung abgegeben wird, kann somit vorteilhaft weiter an das Kraftfahrzeugbauteil gegeben werden, sodass eine Kühlung der Kopf-oben-Anzeigevorrichtung, insbesondere der Projektionsrichtung, weiter verbessert werden kann.

Es hat sich weiterhin als vorteilhaft erwiesen, wenn an dem Außengehäuse der Kopf-oben-Anzeigevorrichtung eine Mehrzahl von Befestigungseinrichtungen, insbesondere zwei Befestigungseinrichtungen, insbesondere vier Befestigungseinrichtungen, zum Befestigen der Kopf-oben-Anzeigevorrichtung an einem Kraftfahrzeugbauteil angeordnet sind. Mittels dieser Ausgestaltungsform kann eine besonders hohe Positionssicherheit gewährleistet werden.

Gemäß einer weiteren vorteilhaften Ausgestaltungsform kann die Befestigungseinrichtung derart ausgebildet sein, dass eine Verkippung der Kopf-oben-Anzeigevorrichtung gegenüber dem Kraftfahrzeugbauteil, insbesondere einem Armaturenbrett des Kraftfahrzeugs, maximal 4°, insbesondere maximal 2° , beträgt. Dies ermöglicht es, dass insbesondere gegenüber einem bereitgestellten Bauraum innerhalb des Kraftfahrzeugbauteils keine ungewollten Lücken beziehungsweise Spalten entstehen, in welchen sich beispielsweise Schmutz beziehungsweise andere Partikel sammeln können.

Die Erfindung betrifft ebenfalls eine Anordnung mit einer Kopf-oben-Anzeigevorrichtung, wie zuvor beschrieben, und ein Kraftfahrzeugbauteil, wobei die Kopf-oben-Anzeigevorrichtung über das zumindest eine Kugelgelenk relativ bewegbar an dem Kraftfahrzeugbauteil gelagert ist.

Bevorzugt ist vorgesehen, dass die Kopf-oben-Anzeigevorrichtung vor dem Beobachter, insbesondere vor dem Fahrer in einem Cockpit des Kraftfahrzeugs angeordnet ist. Ferner ist bevorzugt vorgesehen, dass die Kopf-oben-Anzeigevorrichtung insbesondere in einem Armaturenbrett des Kraftfahrzeugs als Kraftfahrzeugbauteil angeordnet ist. Durch diese Anordnung kann sichergestellt werden, dass das abgestrahlte Licht der Projektionseinrichtung auf die entsprechende Projektionsfläche, insbesondere Windschutzscheibe, ohne optische Hindernisse realisiert werden kann.

Die Erfindung betrifft ebenfalls ein Kraftfahrzeug mit einem Kraftfahrzeugbauteil mit einer Kopf-oben-Anzeigevorrichtung, wie zuvor beschrieben, welche mit der Befestigungseinrichtung an dem Kraftfahrzeugbauteil angeordnet ist. Das Kraftfahrzeug ist insbesondere als Personenkraftfahrzeug ausgebildet.

Ein erfindungsgemäßes Verfahren ermöglicht die Montage einer Kopf-oben-Anzeigevorrichtung in einem Kraftfahrzeug. Die Kopf-oben-Anzeigevorrichtung mit einer ein Außengehäuse umfassenden Projektionseinrichtung, welche zum Projizieren eines virtuellen Bilds auf eine außerhalb der Projektionseinrichtung liegende von einem Beobachter betrachtbare Projektionsfläche ausgebildet ist, wird bereitgestellt. Die Kopf-oben-Anzeigevorrichtung wird mittels einer Befestigungseinrichtung an dem Außengehäuse an einem Kraftfahrzeugbauteil befestigt.

Erfindungsgemäß ist vorgesehen, dass die zumindest eine Befestigungseinrichtung mit einem Kugelgelenk ausgebildet wird. Mit dem Kugelgelenk wird eine Positionseinstellung der Kopf-oben-Anzeigevorrichtung relativ zum Kraftfahrzeugbauteil in mit dem Kraftfahrzeugbauteil verbundenen Zustand durchgeführt. Das Kugelgelenk weist einen Kugelkopf auf, der mit einem Befestigungselement des Kraftfahrzeugbauteils gekoppelt wird und durch Drehen um das Kugelgelenk wird eine Justage des Außengehäuses der Kopf-oben-Anzeigevorrichtung gegenüber dem Kraftfahrzeugbauteil durch Einstellen einer von mehreren möglichen Positionen als Endposition durchgeführt.

In einer vorteilhaften Ausgestaltungsform des Verfahrens kann an dem Kraftfahrzeugbauteil ein Montageraum zur Montage der Kopf-oben-Anzeigevorrichtung ausgebildet werden und Entformungsschrägen an Begrenzungen des Bauraums ausgebildet werden. Somit kann verhindert werden, dass auch bei einem fahrzeugspezifischen "verkippten" Verbau der Kopf-oben-Anzeigevorrichtung keine Bauteile oder Grate über die vertikalen Begrenzungen überstehen.

Gemäß einer weiteren vorteilhaften Ausgestaltungsform des Verfahrens können für unterschiedliche Kraftfahrzeuge unterschiedliche Spiegel für die Projektionseinrichtung bereitgestellt werden und abhängig von der daraus resultierenden unterschiedlichen Projektion des virtuellen Bilds die Endposition eingestellt werden. Kraftfahrzeuge können sich hierbei beispielsweise bezüglich dem Hersteller, dem Herstellungsjahr, der Herstellungsbaureihe, und vom Fahrzeugtyp unterscheiden. Beim Fahrzeugtyp kann es sich beispielsweise um ein Fahrzeug einer gleichen Baureihe handeln, welches dennoch unterschiedliche Kraftfahrzeugbauteile aufweist, insbesondere unterschiedliche Windschutzscheiben, die sich in ihrer Neigung beziehungsweise Krümmung unterscheiden. Beispielsweise hat es sich gezeigt, dass Cabrios beziehungsweise Coupes eine flachere Windschutzscheibenneigung aufweisen, als ein aus der gleichen Baureihe kommendes Limousinenfahrzeug. Hierbei kann die Kopf-oben-Anzeigevorrichtung, insbesondere das Außengehäuse, mit der Projektionseinheit und der Optikeinrichtung für verschiedenste Fahrzeugarten, wie eben oben beschrieben, verwendet werden. Lediglich der Spiegel, der zur Anpassung des virtuellen Bilds an die Windschutzscheibenanomalie, die fahrzeugspezifisch ist, kann hierbei individuell unterschiedlich sein. Der Spiegel kann hierbei in den Ausmaßen gleich zu einem anderen Spiegel sein, jedoch können sich beispielsweise die Spiegel in der Freiformfläche unterscheiden, sodass die Freiformfläche das durch die Projektionseinrichtung projizierte virtuelle Bild entsprechend der Windschutzscheibenanomalie anpassen kann. Entsprechend der unterschiedlichen Voraussetzungen der Windschutzscheibe kann dann die Projektionseinrichtung in dem Träger entsprechend angepasst werden, insbesondere eingestellt werden, da mehrere Positionen möglich sind, und dann in einer Endposition fixiert werden. Es kann eine Endposition des Außengehäuses abhängig von einem vorgegebenen Überdeckungsgrad der Fläche des virtuellen Bildes mit der von dem Beobachter einsehbaren Projektionsfläche eingestellt werden. Somit kann erreicht werden, dass das virtuelle Bild in einen Sichtbereich des Beobachters, insbesondere des Fahrers, projiziert wird. Dabei kann der Überdeckungsgrad insbesondere so realisiert werden, dass das virtuelle Bild ganzheitlich im Sichtbereich des Fahrers projiziert wird. Die Einstellung erfolgt hierbei insbesondere so, dass das virtuelle Bild sich in einem unteren Bereich des Sichtbereichs des Fahrers befindet, sodass insbesondere eine Überdeckung beziehungsweise Überlappung mit einer Spiegelung des Armaturenbretts nicht gegeben ist. Des Weiteren kann somit das virtuelle Bild so projiziert werden, dass es nicht beziehungsweise im Wesentlichen nicht beim Straßenverkehr stört.

Die mit Bezug auf die erfindungsgemäße Kopf-oben-Anzeigevorrichtung vorgestellten bevorzugten Ausführungsformen und deren Vorteile gelten entsprechend für die erfindungsgemäße Anordnung, für das erfindungsgemäße Kraftfahrzeug, sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine ausschnittsweise Darstellung eines Kraftfahrzeugs, welches eine Kopf-oben-Anzeigevorrichtung gemäß einer Ausführungsform der vorliegenden Erfindung aufweist;
- Fig. 2: eine schematische Perspektivansicht einer Ausführungsform einer erfindungsgemäßen Kopf-oben-Anzeigevorrichtung;
- Fig. 3: eine schematische Perspektivansicht einer Ausführungsform einer erfindungsgemäßen Befestigungseinrichtung;
- Fig. 4: eine weitere schematische Perspektivansicht einer Ausführungsform einer erfindungsgemäßen Befestigungseinrichtung; und
- Fig. 5: die Kopf-oben-Anzeigevorrichtung gemäß Fig. 5 in einem montierten Zustand an unterschiedlichen Positionen eines Kraftfahrzeugbauteils.

In den Figuren werden gleiche und funktionsgleiche Elemente mit den gleichen Bezugszeichen versehen.

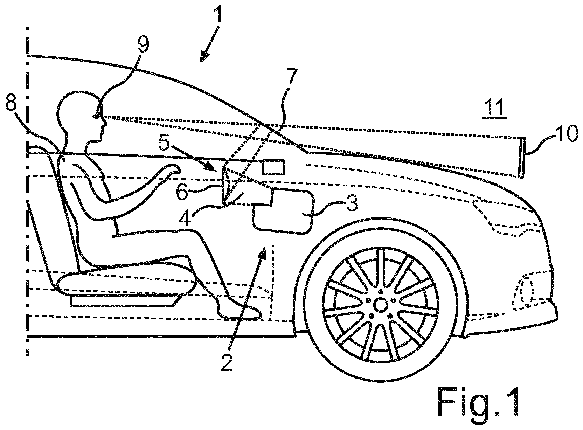

Fig. 1 zeigt eine ausschnittsweise Darstellung eines Kraftfahrzeugs 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst eine Kopf-oben-Anzeigevorrichtung 2. Die Kopf-oben-Anzeigevorrichtung 2 ist in dem vorliegenden Ausführungsbeispiel als Kopf-oben-Kopf-oben-Anzeigevorrichtung beziehungsweise als Head-up-Display ausgebildet.

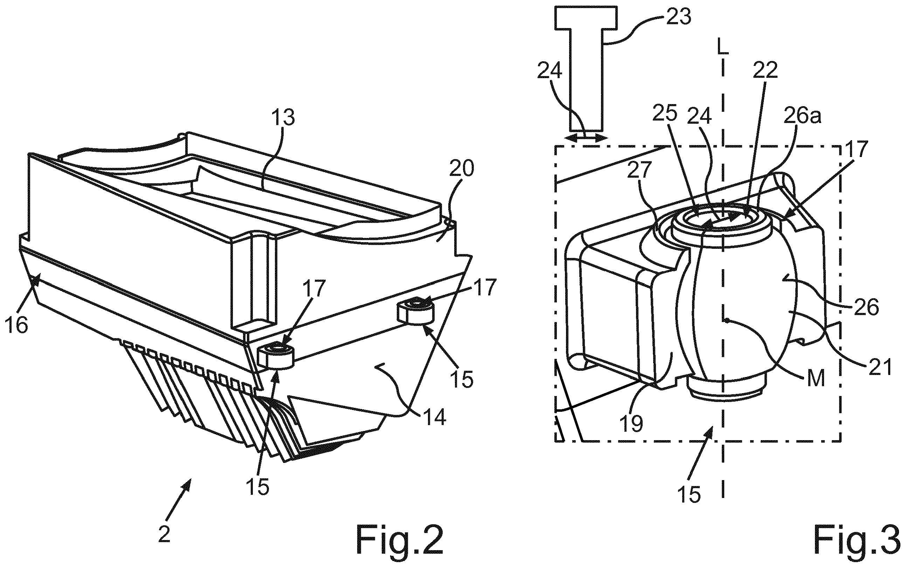

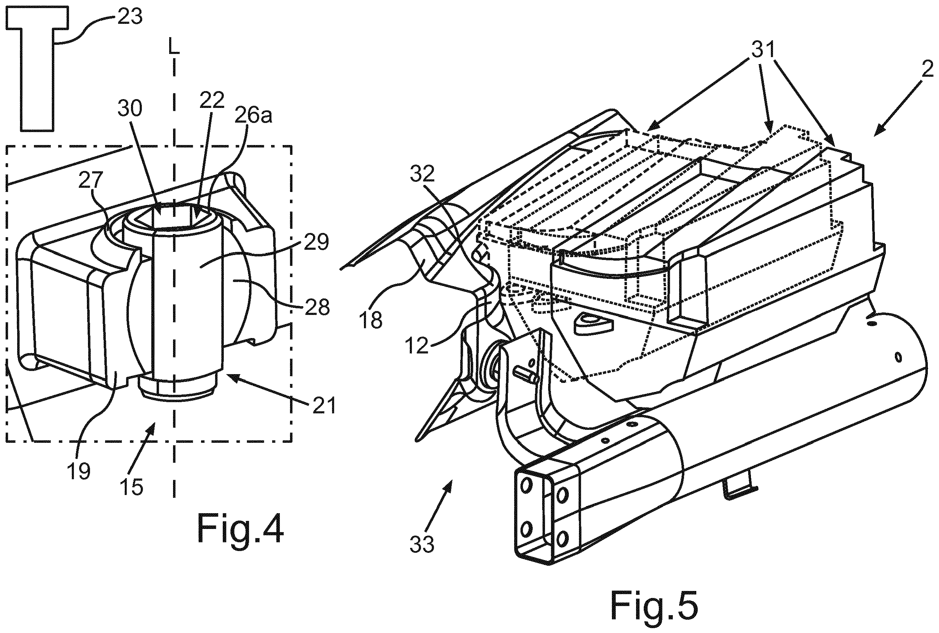

Die Kopf-oben-Anzeigevorrichtung 2 umfasst ein Außengehäuse 20 (Fig. 2) mit einer Projektionseinrichtung 3. Mittels der Projektionseinrichtung 3 wird Licht 4 abgestrahlt. Insbesondere kann mit der Projektionseinrichtung 3 ein Bild bereitgestellt werden. Die Projektionseinrichtung 3 kann beispielsweise einen Bildschirm aufweisen, mit dem Licht von einer Lichtquelle der Projektionseinrichtung 3 zur Erzeugung des virtuellen Bilds 10 verarbeitet wird und dann das darzustellende Bild bereitgestellt wird. Darüber hinaus umfasst die Kopf-oben-Anzeigevorrichtung 2 eine Optikeinrichtung 5. Die Optikeinrichtung 5 umfasst vorliegend einen Spiegel 6. Das von der Projektionseinrichtung 3 abgestrahlte Licht 4 trifft in Form des virtuellen Bilds 10 zunächst auf den Spiegel 6 und anschließend auf ein Anzeigeelement beziehungsweise eine vorrichtungsexterne Projektionsfläche, welche beziehungsweise welche insbesondere eine Windschutzscheibe 7 ist. Die Projektionseinrichtung 3 und die Optikeinrichtung 5 sind vorliegend innerhalb des Außengehäuses 20 angeordnet, welches wiederum innerhalb eines Kraftfahrzeugbauteils18 (Fig. 5), welches insbesondere als Armaturenbrett des Kraftfahrzeugs 1 ausgebildet ist, angeordnet ist.

Die Windschutzscheibe 7 weist eine Spiegelfläche auf und ist semi-transparent ausgebildet. Das Licht 4, das von der Projektionseinrichtung 3 abgestrahlt wird, wird mittels der Optikeinrichtung 5 auf die Windschutzscheibe 7 projiziert. Ferner wird das Licht 4, das auf die Windschutzscheibe 7 projiziert wird, zu Augen 9 eines Beobachters, insbesondere eines Fahrers 8 des Kraftfahrzeugs 1 reflektiert. Somit überlagert sich diese Anzeige mit dem Licht, das von einem Umgebungsbereich 11 des Kraftfahrzeugs 1 zu den Augen 9 des Fahrers 8 gelangt, mit dem Licht, das auf die Windschutzscheibe 7 projiziert wird. Für den Fahrer 8 des Kraftfahrzeugs 1 ergibt sich somit eine virtuelle Anzeige beziehungsweise das virtuelle Bild 10.

Fig. 2 zeigt die Kopf-oben-Anzeigevorrichtung 2 in einer schematischen Perspektivansicht. Die Kopf-oben-Anzeigevorrichtung 2 befindet sich dabei in einem unmontierten Zustand. Das Außengehäuse 20 ist dabei noch nicht an einem Träger 12 (Fig. 5) des Kraftfahrzeugbauteils 18 angeordnet. Das Außengehäuse 20 umfasst dabei insbesondere die Projektionseinrichtung 3, die Optikeinrichtung 5 sowie den Spiegel 6, der in dieser Zeichnung nicht dargestellt ist. Ferner weist die Projektionseinrichtung 3 eine Abdeckung 13 auf, die insbesondere aus einem Glas beziehungsweise Kunststoff ausgebildet ist, und transparent sein kann, und welche die Projektionseinrichtung 3 vor äußeren Einflüssen, insbesondere Schmutz, schützt. Insbesondere kann an einer ersten Seite 14 des Außengehäuses 20 eine Befestigungseinrichtung 15, insbesondere zwei Befestigungseinrichtungen 15, angeordnet sein. An einer nicht dargestellten zweiten Seite 16 des Außengehäuses 20 kann es ebenfalls vorgesehen sein, dass eine Befestigungseinrichtung 15, insbesondere zwei Befestigungseinrichtungen 15, angeordnet ist. Mittels dieser Befestigungseinrichtung 15 kann die Kopf-oben-Anzeigevorrichtung 2 an dem Kraftfahrzeugbauteil 18, insbesondere an dem Träger 12, befestigt werden.

Insbesondere kann vorgesehen sein, dass die insbesondere vier Befestigungseinrichtungen 15 von gleicher Bauart sind. Die Befestigungseinrichtung 15 weist ein Kugelgelenk 17 auf. Das Kugelgelenk 17 wiederum weist eine Kugelpfanne 19 und einen Kugelkopf 21 auf. Insbesondere kann vorgesehen sein, dass die Kugelpfanne 19 und der Kugelkopf 21 aus dem gleichen Material hergestellt sind. Beispielsweise können diese aus Metall oder aus Kunststoff hergestellt sein.

Insbesondere wenn das Kugelgelenk 17 metallisch ist, kann das Kugelgelenk 17 als Wärmebrücke zu dem Kraftfahrzeugbauteil 18 dienen. Damit kann beispielsweise realisiert werden, dass eine Wärme der Projektionseinrichtung 3 an das Außengehäuse 20 abgegeben wird und wiederum das Außengehäuse 2 Wärme an das Kugelgelenk 17 geben kann, welches wiederum wärmeleitend mit dem Kraftfahrzeugbauteil 18 verbunden ist.

Fig. 3 zeigt eine schematische Perspektivansicht einer ersten Ausgestaltungsform der Befestigungseinrichtung 15. Der Kugelkopf 21 weist eine Aufnahme 22 auf. In die Aufnahme 22 ist ein Befestigungselement 23 einbringbar, welches derart ausgebildet ist, dass die Befestigungseinrichtung 15 an dem Kraftfahrzeugbauteil 18 anbringbar ist. Das Befestigungselement 23 kann beispielsweise eine Schraube, ein Stift, ein Niet etc. sein. Insbesondere kann vorgesehen sein, dass die Aufnahme 22 und das Befestigungselement 23 einen gleichen Durchmesser 24 aufweisen, sodass eine hohe Positionssicherheit gewährleistet werden kann. Die Aufnahme 22 verläuft insbesondere entlang einer Längsachse L der Aufnahme 22. Insbesondere verläuft die Längsachse L durch einen Mittelpunkt M des Kugelkopfs 21.

An einem Eingang 25 der Aufnahme 22 kann an einer Oberfläche 26 des Kugelkopfs 21 ein erhabener Kragen 26a ausgebildet sein, der insbesondere um den Eingang 25 umlaufend ausgebildet ist. Dadurch kann der Kragen 26a einen Anschlagsteg bilden, durch welchen eine Bewegung des Kugelkopfs 21 in der Kugelpfanne 19 des Kugelgelenks 17 definiert begrenzt ist. An der Kugelpfanne 19 kann ein weiterer Kragen 27 angeordnet sein, welcher ebenfalls dazu ausgebildet ist, eine Bewegung des Kugelkopfs 21 innerhalb der Kugelpfanne 19 des Kugelgelenks 17 definiert zu begrenzen.

Die Kugelpfanne 19 kann dabei einstückig ausgebildet sein, sodass das Kugelgelenk 17 mittels beispielsweise eines Spritzgussverfahrens in die einstückige Kugelpfanne 19 eingespritzt werden kann.

Die Kugelpfanne 19 des Kugelgelenks 17 ist insbesondere ringförmig ausgebildet.

Ebenfalls möglich ist, dass die Kugelpfanne 19 zumindest zweiteilig ausgebildet ist und ein erster Teil der Kugelpfanne 19 mit einem zweiten Teil der Kugelpfanne 19 beispielsweise verschraubt oder auch verklebt werden kann. Insbesondere kann dann vorgesehen sein, dass der erste Teil der Kugelpfanne 19 den Kugelkopf 21 zumindest teilweise umschließt und der zweite Teil der Kugelpfanne 19 den Kugelkopf 21 ebenfalls zumindest teilweise umschließt, und im montierten Zustand den Kugelkopf 21 beweglich halten kann.

Fig. 4 zeigt eine weitere perspektivische Ansicht einer weiteren Ausführungsform einer erfindungsgemäßen Befestigungseinrichtung 15. Das Kugelgelenk 17 weist die Kugelpfanne 19 und den Kugelkopf 21 auf. Der Kugelkopf 21 weist in dieser Ausführungsform ein kugelförmiges Basiselement 28 und eine dazu separat beweglich angeordnete Buchse 29 auf. Die Buchse 29 ist dabei derart beweglich in das Basiselement 28 eingesetzt, dass sie in Richtung der Längsachse L des Kugelkopfs 21 relativ zum Kugelkopf 21 verstellbar ist. Die Buchse 29 kann eine weitere Aufnahme 30 bereitstellen, in welche ein Befestigungselement 23 einbringbar ist. Das Befestigungselement 23 kann dabei insbesondere mit der Innengeometrie der Aufnahme 30 korrespondieren. Mittels dieser Ausgestaltungsform kann somit ein weiterer Freiheitsgrad für die Befestigungseinrichtung 15 bereitgestellt werden. Somit ist ein weiteres Verschieben in Längsrichtung L der Befestigungseinrichtung 15 möglich. Die Aufnahme 30 ist hier beispielsweise mit einer eckigen Kontur, insbesondere mit einem Sechskant, ausgebildet.

Fig. 5 zeigt eine schematische Perspektivansicht einer an einem Kraftfahrzeugbauteil 18 verbauten Kopf-oben-Anzeigevorrichtung 2. Fig. 5 zeigt durch unterschiedliche gestrichelte Darstellungen insbesondere unterschiedliche Positionen 31 für die Kopf-oben-Anzeigevorrichtung 2. Die Kopf-oben-Anzeigevorrichtung 2 kann insbesondere an dem Träger 12, insbesondere an einem Querträger, des Kraftfahrzeugbauteils 18 angeordnet sein. Insbesondere kann es an dem Kraftfahrzeugbauteil 18 beziehungsweise dem Träger 12 verschraubt sein. Dadurch, dass das Außengehäuse 20 fahrzeugunspezifisch ausgebildet ist, kann dies insbesondere während einer Endmontage des Kraftfahrzeugs 1 fahrzeugspezifisch auf die Windschutzscheibe 7 beziehungsweise auf die Windschutzscheibenneigung beziehungsweise Windschutzscheibenkrümmung ausgerichtet beziehungsweise justiert werden. Das Außengehäuse 20 ist insbesondere derart justiert, dass ein virtuelles Bild 10 sich mit dem Sichtbereich des Beobachters, insbesondere des Fahrers 8, überschneidet, wobei gleichzeitig eine Position des virtuellen Bilds 10 im unteren Sichtbereich des Beobachters sich als vorteilhaft erwiesen hat. In dem in Fig. 5 gezeigten Bild wurde eine Justage der Position des Außengehäuses 20 entsprechend spezifischer Windschutzscheibenkrümmungen, durch welche die verschiedenen Positionen 31 dargestellt sind, durchgeführt.

Beim Verfahren zur Montage der Kopf-oben-Anzeigevorrichtung 2 befindet sich das Kraftfahrzeug 1 insbesondere in einem bereits zumindest teilweise montierten Zustand, insbesondere in einem Endmontagezustand. Die Anordnung der Kopf-oben-Anzeigevorrichtung 2 an dem Kraftfahrzeugbauteil 18, wie es insbesondere ein Armaturenbrett sein kann, kann beispielsweise durch Verschrauben des Befestigungselements 23 über die Befestigungseinrichtung 15 erfolgen. Das Außengehäuse 20 umfasst dabei die Projektionseinrichtung 3 und die Optikeinrichtung 5. Der Spiegel 6, der sich von anderen Spiegeln in der Freiformfläche unterscheiden kann, wurde fahrzeugspezifisch in dem Außengehäuse 20 angeordnet. In einem nächsten Schritt erfolgt das Justieren des Außengehäuses 20 über die Kugelgelenke 17 in Fahrzeuglängs-, Fahrzeughoch- und Fahrzeugquerrichtung, sowie ein Drehen des Außengehäuses 20 in die gewünschte Position 31. Das Justieren erfolgt insbesondere in der Art, dass das virtuelle Bild 10 in vorteilhafter Weise auf die spezifische Windschutzscheibe 7, insbesondere auf die spezifische Windschutzscheibenkrümmung und Windschutzscheibenneigung, angepasst wird. Insbesondere kann das Kraftfahrzeugbauteil 18, dort wo die Kopf-oben-Anzeigevorrichtung 2 verbaut wird, Entkrümmungsschrägen 32 aufweisen, sodass bei einer Positionierung der Kopf-oben-Anzeigevorrichtung 2 keine Lücken beziehungsweise Spalten zwischen der Kopf-oben-Anzeigevorrichtung 2 und dem Kraftfahrzeugbauteil 18 entstehen. Des Weiteren kann insbesondere die Befestigungseinrichtung 15 derart ausgebildet sein, dass eine Verkippung der Kopf-oben-Anzeigevorrichtung 2 gegenüber dem Kraftfahrzeugbauteil 18 maximal 4°, insbesondere maximal 2°, beträgt. Dies dient insbesondere dazu, Lücken und Spalten zwischen der Kopf-oben-Anzeigevorrichtung 2 und dem Kraftfahrzeugbauteil 18 zu vermeiden. In einem weiteren Schritt kann das Außengehäuse 20 fixiert werden. Die Kopf-oben-Anzeigevorrichtung 2 bildet im am Kraftfahrzeugbauteil 18 verbauten Zustand eine Anordnung 33.

Die Justage und Montage der Kopf-oben-Anzeigevorrichtung 2 am Kraftfahrzeugbauteil 18 kann alternativ auch vor einer Endmontage des Kraftfahrzeugs 1, beispielsweise bei einem Zulieferer erfolgen, und dort beispielsweise an einem "Dummy-Kraftfahrzeug" erfolgen, sodass eine entsprechende justierte fahrzeugspezifische Kopf-oben-Anzeigevorrichtung 2 geliefert werden kann.

## Patentansprüche

1. Kopf-oben-Anzeigevorrichtung (2) für ein Kraftfahrzeug (1) , mit einer Projektionseinrichtung (3), welche zum Projizieren eines virtuellen Bilds (10) auf eine außerhalb der Projektionseinrichtung (3) liegende und von einem Beobachter betrachtbare Projektionsfläche ausgebildet ist, wobei die Kopf-oben-Anzeigevorrichtung (2) zumindest eine Befestigungseinrichtung (15) an einem Außengehäuse (20) der Kopf-oben-Anzeigevorrichtung (2) aufweist, mittels welchem die Kopf-oben-Anzeigevorrichtung (2) an einem Kraftfahrzeugbauteil (18) befestigbar ist,
wobei die zumindest eine Befestigungseinrichtung (15) ein Kugelgelenk (17) aufweist, mit welchem eine Positionseinstellung der Kopf-oben-Anzeigevorrichtung (2) zum Kraftfahrzeugbauteil (18) im mit den Kraftfahrzeugbauteil (18) verbundenen Zustand durchführbar ist, wobei das Kugelgelenk (17) einen Kugelkopf (21) aufweist, der mit einem Befestigungselement (23) des Kraftfahrzeugbauteils (18) koppelbar ist,
**dadurch gekennzeichnet, dass**
der Kugelkopf (21) eine Aufnahme (22) aufweist und der Kugelkopf (21) ein kugelförmiges Basiselement (28) und eine dazu separate Buchse (29) aufweist, die in das Basiselement (28) eingesetzt ist und in Richtung der Längsachse (L) des Kugelkopfs (21) relativ zum Kugelkopf (21) verstellbar ist.

2. Kopf-oben-Anzeigevorrichtung (2) nach Anspruch 1,
**dadurch gekennzeichnet, dass**
eine Längsachse (L) der Aufnahme (22) durch einen Mittelpunkt (M) des Kugelkopfs (21) verläuft.

3. Kopf-oben-Anzeigevorrichtung (2) nach Anspruch 1 oder 2,
**dadurch gekennzeichnet, dass**
an einem Eingang (25) der Aufnahme (22) auf einer Oberfläche (26) des Kugelkopfs (21) ein erhabener Kragen (26a) ausgebildet ist, insbesondere um den Eingang (25) umlaufend ausgebildet ist.

4. Kopf-oben-Anzeigevorrichtung (2) nach Anspruch 3,
**dadurch gekennzeichnet, dass**
der Kragen (26a) einen Anschlagsteg bildet, durch welchen eine Bewegung des Kugelkopfs (21) in einer Kugelpfanne (19) des Kugelgelenks (17) definiert begrenzt ist.

5. Kopf-oben-Anzeigevorrichtung (2) nach einem der vorhergehenden Ansprüche, **dadurch gekennzeichnet, dass**
eine Kugelpfanne (19) des Kugelgelenks (17) ringförmig ausgebildet ist.

6. Kopf-oben-Anzeigevorrichtung (2) nach einem der vorhergehenden Ansprüche, **dadurch gekennzeichnet, dass**
an dem Außengehäuse (20) der Kopf-oben-Anzeigevorrichtung (2) zwei Befestigungseinrichtungen (15), zum Befestigen der Kopf-oben-Anzeigevorrichtung (2) an dem Kraftfahrzeugbauteil (18) angeordnet sind.

7. Kopf-oben-Anzeigevorrichtung (2) nach einem der vorhergehenden Ansprüche, **dadurch gekennzeichnet, dass**
die Befestigungseinrichtung (15) derart ausgebildet ist, dass eine Verkippung der Kopf-oben-Anzeigevorrichtung (2) gegenüber dem Kraftfahrzeugbauteil (18), insbesondere einem Armaturenbrett des Kraftfahrzeugs (1), maximal 4°, insbesondere maximal 2°, beträgt.

8. Anordnung (33) mit einer Kopf-oben-Anzeigevorrichtung (2) nach einem der Ansprüche 1 bis 7 und einem Kraftfahrzeugbauteil (18) , wobei die Kopf-oben-Anzeigevorrichtung (22) über das zumindest eine Kugelgelenk (17) relativ bewegbar an dem Kraftfahrzeugbauteil (18) gelagert ist.

9. Kraftfahrzeug (1) mit einem Kraftfahrzeugbauteil (18) und einer Kopf-oben-Anzeigevorrichtung (2) nach einem der Ansprüche 1 bis 8, welche mit der Befestigungseinrichtung (15) an dem Kraftfahrzeugbauteil (18) angeordnet ist.

10. Verfahren zur Montage einer Kopf-oben-Anzeigevorrichtung (2) in einem Kraftfahrzeug (1), bei welchem die Kopf-oben-Anzeigevorrichtung (2) mit einer ein Außengehäuse (20) umfassenden Projektionseinrichtung (3), welche zum Projizieren eines virtuellen Bilds (10) auf eine außerhalb der Projektionseinrichtung (3) liegende und von einem Beobachter betrachtbare Projektionsfläche ausgebildet ist, bereitgestellt wird und wobei die Kopf-oben-Anzeigevorrichtung (2) mittels einer Befestigungseinrichtung (15) an dem Außengehäuse (20) an einem Kraftfahrzeugbauteil (18) befestigt wird,
wobei die zumindest eine Befestigungseinrichtung (15) mit einem Kugelgelenk (17) bereitgestellt wird, mit welchem eine Positionseinstellung der Kopf-oben-Anzeigevorrichtung (2) zum Kraftfahrzeugbauteil (18) im mit den Kraftfahrzeugbauteil (18) verbundenen Zustand durchgeführt wird, wobei das Kugelgelenk (17) einen Kugelkopf (21) aufweist, der mit einem Befestigungselement (23) des Kraftfahrzeugbauteils (18) gekoppelt wird und durch Drehen um das Kugelgelenk (17) eine Justage des Außengehäuses (20) gegenüber dem Kraftfahrzeugbauteil (18) durch Einstellen einer von mehreren möglichen Positionen (31) als Endposition durchgeführt wird,
**dadurch gekennzeichnet, dass**
der Kugelkopf (21) mit einer Aufnahme (22) bereitgestellt wird und der Kugelkopf (21) mit einem kugelförmigen Basiselement (28) und eine dazu separate Buchse (29) bereitgestellt wird, die in das Basiselement (28) eingesetzt ist und in Richtung der Längsachse (L) des Kugelkopfs (21) relativ zum Kugelkopf (21) verstellbar ist.

11. Verfahren nach Anspruch 10,
**dadurch gekennzeichnet, dass**
an dem Kraftfahrzeugbauteil (18) ein Montageraum zur Montage der Kopf-oben-Anzeigevorrichtung (2) ausgebildet wird und Entformungsschrägen (32) an Begrenzungen des Bauraums ausgebildet werden.

12. Verfahren nach Anspruch 10 oder 11,
**dadurch gekennzeichnet, dass**
für unterschiedliche Kraftfahrzeuge (1) unterschiedliche Spiegel (6) für die Projektionseinrichtung (3) bereitgestellt werden, und abhängig von der daraus resultierenden unterschiedlichen Projektion des virtuellen Bilds (10) die Endposition individuell eingestellt wird.

## Claims

1. Head-up display device (2) for a motor vehicle (1), comprising a projection apparatus (3) designed to project a virtual image (10) on a projection surface located outside of the projection apparatus (3) and observable by an observer, the head-up display device (2) having at least one fastening apparatus (15) on an external housing (20) of the head-up display device (2), the head-up display device (2) being fastenable to a motor vehicle component (18) by means of said fastening apparatus,
the at least one fastening apparatus (15) having a ball joint (17) which renders a positional adjustment of the head-up display device (2) relative to the motor vehicle component (18) performable in the state where said head-up display device is connected to the motor vehicle component (18), the ball joint (17) having a ball head (21) that is couplable to a fastening element (23) of the motor vehicle component (18),
**characterized in that**
the ball head (21) has a receptacle (22), and the ball head (21) has a spherical base element (28) and a sleeve (29) which is separate therefrom, inserted into the base element (28) and adjustable relative to the ball head (21) in the direction of the longitudinal axis (L) of the ball head (21).

2. Head-up display device (2) according to Claim 1, **characterized in that**
a longitudinal axis (L) of the receptacle (22) runs through a centre (M) of the ball head (21).

3. Head-up display device (2) according to Claim 1 or 2,
**characterized in that**
a projecting collar (26a) is formed at an entrance (25) to the receptacle (22) on a surface (26) of the ball head (21) and in particular is formed so as to encircle the entrance (25).

4. Head-up display device (2) according to Claim 3, **characterized in that**
the collar (26a) forms a stop web which delimits a movement of the ball head (21) in a ball socket (19) of the ball joint (17) in defined fashion.

5. Head-up display device (2) according to any one of the preceding claims,
**characterized in that**
a ball socket (19) of the ball joint (17) has a ringshaped form.

6. Head-up display device (2) according to any one of the preceding claims,
**characterized in that**
two fastening apparatuses (15) for fastening the head-up display device (2) to the motor vehicle component (18) are arranged on the external housing (20) of the head-up display device (2).

7. Head-up display device (2) according to any one of the preceding claims,
**characterized in that**
the fastening apparatus (15) is designed such that the tilt of the head-up display device (2) relative to the motor vehicle component (18), in particular an instrument panel of the motor vehicle (1), is no more than 4°, in particular no more than 2°.

8. Arrangement (33) comprising a head-up display device (2) according to any one of Claims 1 to 7 and a motor vehicle component (18), the head-up display device (22) being mounted in relative movable fashion on the motor vehicle component (18) by way of the at least one ball joint (17).

9. Motor vehicle (1) comprising a motor vehicle component (18) and a head-up display device (2) according to any one of Claims 1 to 8, the latter being arranged on the motor vehicle component (18) by way of the fastening apparatus (15).

10. Method for assembling a head-up display device (2) in a motor vehicle (1), in which the head-up display device (2) is provided with a projection apparatus (3) which comprises an external housing (20) and which is designed to project a virtual image (10) on a projection surface located outside of the projection apparatus (3) and observable by an observer, with the head-up display device (2) being fastened to a motor vehicle component (18) by means of a fastening apparatus (15) on the external housing (20),
with the at least one fastening apparatus (15) being provided with a ball joint (17) which performs a positional adjustment of the head-up display device (2) relative to the motor vehicle component (18) in the state where said head-up display device is connected to the motor vehicle component (18), and with the ball joint (17) having a ball head (21) which is coupled to a fastening element (23) of the motor vehicle component (18) and which brings about an adjustment of the external housing (20) vis-a-vis the motor vehicle component (18) by setting one of a plurality of possible positions (31) as final position by way of a rotation about the ball joint (17),
**characterized in that**
the ball head (21) is provided with a receptacle (22), and the ball head (21) is provided with a spherical base element (28) and a sleeve (29) which is separate therefrom, inserted into the base element (28) and adjustable relative to the ball head (21) in the direction of the longitudinal axis (L) of the ball head (21) .

11. Method according to Claim 10,
**characterized in that**
an assembly space for assembling the head-up display device (2) is formed on the motor vehicle component (18) and demoulding inclines (32) are formed at the boundaries of the installation space.

12. Method according to Claim 10 or 11,
**characterized in that**
different mirrors (6) for the projection apparatus (3) are provided for different motor vehicles (1) and the final position is set on an individual basis on the basis of the different projection of the virtual image (10) resulting therefrom.

## Revendications

1. Dispositif d'affichage tête haute (2) pour un véhicule automobile (1), comprenant un moyen de projection (3) qui est réalisé pour projeter une image virtuelle (10) sur une surface de projection située à l'extérieur du moyen de projection (3) et pouvant être observée par un observateur, le dispositif d'affichage tête haute (2) présentant au moins un moyen de fixation (15) sur un boîtier extérieur (20) du dispositif d'affichage tête haute (2) à l'aide duquel le dispositif d'affichage tête haute (2) peut être fixé à un composant de véhicule automobile (18),
dans lequel ledit au moins un moyen de fixation (15) présente un joint à rotule (17) qui permet d'effectuer un réglage de position du dispositif d'affichage tête haute (2) par rapport au composant de véhicule automobile (18) à l'état relié au composant de véhicule automobile (18), le joint à rotule (17) présentant une rotule (21) qui peut être accouplée à un élément de fixation (23) du composant de véhicule automobile (18),
**caractérisé en ce que** la rotule (21) présente un logement (22), et la rotule (21) présente un élément de base sphérique (28) et une douille (29) séparée de celui-ci, qui est insérée dans l'élément de base (28) et est réglable par rapport à la rotule (21) en direction de l'axe longitudinal (L) de la rotule (21).

2. Dispositif d'affichage tête haute (2) selon la revendication 1, **caractérisé en ce qu'**un axe longitudinal (L) du logement (22) passe par un centre (M) de la rotule (21) .

3. Dispositif d'affichage tête haute (2) selon la revendication 1 ou 2, **caractérisé en ce qu'**au niveau d'une entrée (25) du logement (22), une collerette saillante (26a) est réalisée sur une surface (26) de la rotule (21), en particulier réalisée de manière périphérique autour de l'entrée (25).

4. Dispositif d'affichage tête haute (2) selon la revendication 3, **caractérisé en ce que** la collerette (26a) constitue une barrette de butée par laquelle un mouvement de la rotule (21) dans un coussinet sphérique (19) du joint à rotule (17) est limité de manière définie.

5. Dispositif d'affichage tête haute (2) selon l'une quelconque des revendications précédentes, **caractérisé en ce qu'**un coussinet sphérique (19) du joint à rotule (17) est réalisé en forme d'anneau.

6. Dispositif d'affichage tête haute (2) selon l'une quelconque des revendications précédentes, **caractérisé en ce que** deux moyens de fixation (15) permettant de fixer le dispositif d'affichage tête haute (2) au composant de véhicule automobile (18) sont disposés sur le boîtier extérieur (20) du dispositif d'affichage tête haute (2).

7. Dispositif d'affichage tête haute (2) selon l'une quelconque des revendications précédentes, **caractérisé en ce que** le moyen de fixation (15) est réalisé de telle sorte qu'un basculement du dispositif d'affichage tête haute (2) par rapport au composant de véhicule automobile (18), en particulier un tableau de bord du véhicule automobile (1), est au maximum égal à 4°, en particulier au maximum égal à 2°.

8. Agencement (33) comprenant un dispositif d'affichage tête haute (2) selon l'une quelconque des revendications 1 à 7 et un composant de véhicule automobile (18), le dispositif d'affichage tête haute (22) étant monté sur le composant de véhicule automobile (18) de manière mobile par l'intermédiaire du au moins un joint à rotule (17).

9. Véhicule automobile (1) comprenant un composant de véhicule automobile (18) et un dispositif d'affichage tête haute (2) selon l'une quelconque des revendications 1 à 8, qui est disposé avec le moyen de fixation (15) sur le composant de véhicule automobile (18) .

10. Procédé de montage d'un dispositif d'affichage tête haute (2) dans un véhicule automobile (1), dans lequel le dispositif d'affichage tête haute (2) est prévu avec un moyen de projection (3) comprenant un boîtier extérieur (20) et qui est réalisé pour projeter une image virtuelle (10) sur une surface de projection située à l'extérieur du moyen de projection (3) et pouvant être observée par un observateur, et le dispositif d'affichage tête haute (2) étant fixé à un composant de véhicule automobile (18) à l'aide d'un moyen de fixation (15) sur le boîtier extérieur (20),
ledit au moins un moyen de fixation (15) étant prévu avec un joint à rotule (17) par lequel un réglage de position du dispositif d'affichage tête haute (2) par rapport au composant de véhicule automobile (18) est effectué à l'état relié au composant de véhicule automobile (18), le joint à rotule (17) présentant une rotule (21) qui est accouplée à un élément de fixation (23) du composant de véhicule automobile (18), et par la rotation autour du joint à rotule (17), un ajustement du boîtier extérieur (20) par rapport au composant de véhicule automobile (18) est effectué en réglant une de plusieurs positions (31) possibles comme une position d'extrémité,
**caractérisé en ce que** la rotule (21) est prévue avec un logement (22), et la rotule (21) est prévue avec un élément de base sphérique (28) et une douille (29) séparée de celui-ci qui est insérée dans l'élément de base (28) et est réglable en direction de l'axe longitudinal (L) de la rotule (21) par rapport à la rotule (21).

11. Procédé selon la revendication 10, **caractérisé en ce qu'**un espace de montage pour montage du dispositif d'affichage tête haute (2) est réalisé sur le composant de véhicule automobile (18), et des dépouilles (32) sont réalisées aux limites de l'espace de montage.

12. Procédé selon la revendication 10 ou 11, **caractérisé en ce que** pour différents véhicules automobiles (1), différents miroirs (6) sont prévus pour le moyen de projection (3), et en fonction de la projection différente de l'image virtuelle (10) qui en résulte, la position d'extrémité est réglée individuellement.
